# EUROPÄISCHE PATENTSCHRIFT

(11) **EP 1 986 839 B1**
(45) Veröffentlichungstag und Bekanntmachung des Hinweises auf die Patenterteilung: **02.04.2014**
(21) Anmeldenummer: 07711617.6
(22) Anmeldetag: 21.02.2007
(51) Int. Cl.: B29C 45/56, B29C 45/77

(54) **VERFAHREN ZUR HERSTELLUNG VON DÜNNWANDIGEN KUNSTSTOFF-FORMTEILEN**
PROCESS FOR PRODUCTION OF THIN-WALLED PLASTICS MOULDINGS
PROCEDE DE FABRICATION DE PIECES MOULEES A PAROIS MINCES EN MATIERE PLASTIQUE

(30) Priorität: 22.02.2006 DE 102006008184
(43) Veröffentlichungstag der Anmeldung: 05.11.2008
(73) Patentinhaber: Sumitomo (SHI) Demag Plastics Machinery GmbH, 90571 Schwaig (DE)
(72) Erfinder: LÜCK, André, 90530 Wendelstein (DE)
(74) Vertreter: Hübner, Gerd
(86) Internationale Anmeldenummer: PCT/EP2007/001492
(87) Internationale Veröffentlichungsnummer: WO 2007/096144

(56) Entgegenhaltungen:
- EP-A- 1 314 534
- EP-A- 1 362 684
- EP-B1- 1 343 621
- JP-A- 63 125 321

## Beschreibung

Die Erfindung betrifft ein Verfahren zur Herstellung von dünnwandigen Kunststoff-Formteilen. Dünnwandiger Kunststoff-Formteile zeichnen sich durch sehr geringe Wanddicken in Verbindung mit sehr großen Fließweg-Wanddicken-Verhältnissen aus. Es wird mittlerweile die Auffassung vertreten (Nikolaus Kudlik, "Dünnwandtechnik" in KU Kunststoffe, Jahrgang 89 (1999), 9, Seite 92 - 96), dass man ab einem Fließweg-Wanddicken-Verhältnis von größer als 100 und bei einer Wanddicke von weniger als 1 mm die Kunststoff-Formteile als dünnwandig bezeichnen kann. Die Reduzierung der Wanddicke führt zur Einsparung von Kosten durch Reduzierung des Materialeinsatzes und der Zykluszeit.

Da das Standardspritzgießen bei der Herstellung von dünnwandigen Kunststoff-Formteilen gewisse Nachteile mit sich bringt (hoher Fülldruck, rasche Erstarrung der Schmelze, Begrenzung der Bauteildicke), wird bevorzugt das Spritzprägen eingesetzt (a.a.O., Seite 94, "Spritzprägen bei der DVD-Fertigung"). Das Spritzprägen ist in dem Aufsatz "Spritzprägen, Präzisionstechnik für Spritzgußteile ohne Eigenspannungen" von Erwin Bürkle und Walter Wohlrab in KU Kunststoffe, Jahrgang 89 (1999), 9, Seiten 64 - 69, näher dargestellt. Typisch für das Spritzprägen ist, dass die Kunststoffschmelze in das um einen Prägespalt geöffnete Werkzeug eingespritzt wird, wobei je nach Formteil der Prägespalt von 1 bis 20mm, in speziellen Fällen auch bis 50mm weit ist. Erst wenn der Einspritzvorgang beendet ist, schließt die Spritzgießmaschine das Werkzeug vollständig und baut die Zuhaltekraft auf. Abhängig vom Formteil kann es auch notwendig sein, schon im letzten Drittel des Einspritzweges simultan den Prägevorgang einzuleiten.

Aufgrund der Einstellung eines Prägespaltes erfordert das Spritzprägen den Einsatz von Prägewerkzeugen. Solche Prägewerkzeuge zeichnen sich dadurch aus, dass man eine geschlossene Kavität veränderlicher Größe bilden kann. Derartige Prägewerkzeuge sind in verschiedenen Ausgestaltungen aus dem Stand der Technik bekannt. Aus der EP 0 980 304 B1 sind Prägewerkzeuge in Form von sogenannten Tauchkantenwerkzeugen bekannt. Figur 1 von EP 0 980 304 B1 offenbart ein Tauchkantenwerkzeug, das aus einer Matrize und einem in die Matrize eintauchenden Kern besteht. EP 0 980 304 B1 offenbart ferner ein Tauchkantenwerkzeug mit einem Kern und einer Matrize sowie umlaufenden Tauchkantenleisten, wobei die Tauchkantenleisten an dem Kern in Schließrichtung des Werkzeuges bewegbar angebracht sind. Der Kern wird von den Tauchkantenleisten vollständig umfaßt und die Matrize ist im Bereich der Anschlagflächen der Tauchkantenleisten diesen Anschlagflächen entsprechend ausgebildet. Sobald die Tauchkantenleisten mit der Matrize auf Anschlag kommen, wird eine Kavität gebildet die - abgesehen von etwaigen kleinen Entlüftungskanälen - geschlossen ist, so dass keine Kunststoffschmelze aus dem Prägewerkzeug austreten kann. Aufgrund der Beweglichkeit der Tauchkantenleisten ist die Größe der Kavität veränderlich und ein Spritzprägen möglich. Je nach Formteil kann anstelle einzelner, um den Kern umlaufender und sich aneinanderreihender Tauchkantenleisten auch ein den Kern umschließender, beweglicher Rahmen vorgesehen werden, um ein Prägewerkzeug zu bilden (JP-A-04035922). Eine weitere Variante von Prägewerkzeugen sind Werkzeuge mit einem oder mehreren in die Kavität ein- und ausfahrbaren Kernen; ein derartiges Prägewerkzeug ist beispielsweise aus der US 5,476,629 bekannt. Nachfolgend und im Sinne der Erfindung soll unter Prägewerkzeug jede Art von Werkzeug mit einer Kavität veränderlicher Größe gemeint sein.

Auch wenn das Spritzprägen bei der Herstellung dünnwandiger Formteile gewisse Vorteile gegenüber dem Standardspritzgießen aufweist, so sind einige Nachteile unvermeidbar. So muss nach der Entnahme eines fertigen Formteils die bewegliche Formhälfte des geöffneten Formwerkzeugs zunächst angefahren, also beschleunigt, werden und kurz vor Erreichen des Prägespaltes verzögert und angehalten werden. Nach dem Starten des Einspritzens ist die bewegliche Formhälfte erneut zu beschleunigen und kurz vor ihrem Anschlag auf die feststehende Formhälfte zu verzögern, damit es nicht zu einem heftigen Aufschlag kommt. Anschließend kann die erforderliche Zuhaltekraft aufgebaut werden. Dabei kann es erforderlich sein, beträchtliche Massen zu beschleunigen und zu bremsen, denn neben der eigentlichen Formhälfte ist auch die bewegliche Formaufspannplatte zu beschleunigen und zu verzögern. Typischerweise liegen bei der Herstellung dünnwandiger Formteile die zu beschleunigenden und zu verzögernden Massen im Bereich von 500 kg bis 3000 kg. Gerade bei dünnwandigen Formteilen kann die Weite des Prägespaltes 1mm und weniger betragen. Um die zuvor beschriebenen Massen auf solch kurzen Strecken präzise bewegen zu können, ist ein beträchtlicher Aufwand an Maschinen- und Steuerungstechnik zu betreiben. Da zukünftig immer dünnwandiger Kunststoff-Formteile gewünscht sind - soweit die Stabilität des Kunststoff-Formteils dies zuläßt -, kann das bekannte Spritzprägen überhaupt nicht mehr oder zumindest nicht mehr mit vertretbarem Aufwand eingesetzt werden.

Für die Herstellung von dünnwandigen, rotationssymmetrischen Kunststoff-Formteilen mit einem Boden und einer vergleichsweise hohen Seitenwand, wie beispielsweise Becher oder Pflanztöpfe, ist das sogenannte "fliegende Einspritzen" bekannt, wie es in dem Artikel "Einen Schritt voraus" in der Kundenzeitung "Today 25/2004" der Firma Arburg beschrieben ist. Hierbei wird - ausgehend von dem geöffneten Zustand eines Standard-Formwerkzeugs - die bewegliche Formhälfte wie beim Standardspritzgießen auf die feststehende Formhälfte zubewegt. Ab einer definierten Wegmarke während der Werkzeugzufahrbewegung wird das Einspritzen gestartet. Die beiden gegenläufigen, linearen Bewegungen werden quasi zeitlich gleichgeschaltet. Der Bewegungsablauf soll dabei so aufeinander abgestimmt sein, dass die maximale Zuhaltekraft erst kurz vor Erreichen des Umschaltpunkts von Einspritz- auf Nachdruckphase aufgebaut wird. Da sich das Formwerkzeug zu Beginn des Einspritzens noch in einem geöffneten Zustand befindet und fast während des gesamten Füllvorgangs auch geöffnet bleibt, kann über den Öffnungsspalt die Kavität während des Einspritzvorgangs gut entlüftet werden. Hinzu kommt noch, dass sich durch die parallelen Bewegungsabläufe Totzeiten reduzieren und Bewegungen überlagern, so dass letztlich Zykluszeit eingespart werden kann. Andererseits muss darauf geachtet werden, dass keine Kunststoffschmelze aus dem Öffnungsspalt zwischen den Formhälften austreten kann. Deshalb ist es erforderlich, dass das Formwerkzeug schon geschlossen ist, bevor der Einspritzvorgang beendet ist und auf Nachdruck umgeschaltet wird bzw. bevor die Schmelzefront den Öffnungsspalt erreicht. Gerade bei unsymmetrischen Formteilen kann das Fließwegende stellenweise jedoch sehr schnell erreicht werden, so dass Formwerkzeuge mit solchen Geometrien bereits kurz nach Einspritzbeginn geschlossen sein müssen, um einen Schmelzeeintritt in den Öffnungsspalt und einen Schmelzeaustritt aus dem Formwerkzeug zu verhindern. Die Anwendung dieses bekannten Verfahrens beschränkt sich somit im wesentlichen auf die zu Beginn beschriebenen, rotationssymmetrischen Geometrien, bei denen nach der Füllung des Bodenteils die Schmelzefront zur Bildung der Seitenwand in der Kavität hochsteigt und sich auf den Öffnungsspalt zubewegt, die Fließrichtung also im wesentlichen parallel zur Spritzachse liegt.

JP 631 25 321 A1 betrifft zwar eine Regelprozess für das Einspritzen und Nachdrücken beim Spritzgießen, es bezieht sich aber offensichtlich nicht auf das Einspritzen der Kunststoffschmelze nach einem vorgebbaren Geschwindigkeitsprofil der Schneckenvorschubgeschwindigkeit. Vielmehr wird bei der Einspritzvorrichtung gemäß diesem Dokument mit Hilfe eines Sensors die Schmelzefließgeschwindigkeit innerhalb der sich schließenden Kavität gemessen, wobei die Einspritzdüse blockiert ist.

Die EP 1 362 684 A1 zeigt im Zusammenhang mit dem Einspritzen der Kunststoffschmelze in Fig. 1 (a) und Fig. 4 (a) lediglich das korrekte Geschwindigkeitsprofil der Schneckenvorschubgeschwindigkeit, wenn diese ausgehend vom Ruhezustand mit konstanter Vorschubgeschwindigkeit angesteuert wird. Es ergeben sich dabei die Auf- und Abfahwampen beiderseits des Geschwindigkeitsplateaus in den genannten Figuren. Im Detail beschäftigt sich diese Druckschrift mit einer Einstellung der Rückzugsgeschwindigkeit der Schnecke, jedoch wird hierbei wiederum nur auf einen bestimmten Maximalwert abgezielt.

Aus der EP 1 314 534 A2 ist ein weiteres Verfahren zur Herstellung von dünnwandigen, rotationssymmetrischen Kunststoff-Formteilen mit einem Boden und einer vergleichsweise hohen Seitenwand bekannt. Bei diesem Verfahren wird ein Prägewerkzeug zugefahren und ab einem bestimmten Öffnungsspalt des Prägewerkzeugs der Einspritzvorgang gestartet. Das Prägewerkzeug kann während des Zufahrens kurzzeitig angehalten werden (siehe Figuren 14 (b) und 15 (b) der EP 1 314 534 A2) oder auch unterbrechungsfrei zugefahren werden (siehe Figur 16(b) der EP 1 314 534 A2). Das Einspritzen erfolgt jeweils mit einer konstanten Schneckenvorlaufgeschwindigkeit und ist in jeden Fall beendet, kurz bevor das Zufahren der Formhälften des Prägewerkzeugs beendet ist, d.h. bevor die Formhälften aneinander gestoßen sind und auf Plattenberührung stehen (siehe Figuren 14(c), 15 (c) und 16(c) der EP 1 314 534 A2). Wenn die Formhälften vollständig zugefahren sind und die Kavität vollständig mit Kunststoffschmelze gefüllt ist, werden nachfolgend die Formhälften mit Schließkraft aneinandergepreßt, wobei Druckunterschiede innerhalb der Kavität ausgeglichen werden.

Ausgehend hiervon liegt der Erfindung die Aufgabe zugrunde, ein Verfahren anzugeben, mit dem extrem dünnwandige Kunststoff-Formteile ohne Einschränkung auf rotationssymmetrische Formteil-Geometrien hergestellt werden können und das für Werkzeuge mit mehreren Kavitäten geeignet ist.

Die Lösung dieser Aufgabe erfolgt durch ein Verfahren mit den Merkmalen von Anspruch 1. Weiterentwicklungen und vorteilhafte Ausgestaltungen finden sich in den Unteransprüchen.

Dadurch, dass während der Füllphase das Einspritzen der Kunststoffschmelze nach einem vorgebbarem Geschwindigkeitsprofil der Schneckenvorschubgeschwindigkeit erfolgt, kann der Einspritzvorgang optimal an die jeweilige Formteil- bzw. Werkzeuggeometrie angepaßt werden, was insbesondere bei Werkzeugen mit mehreren Kavitäten und bei nicht rotationssymmetrischen Formteilen vorteilhaft ist.

Das Geschwindigkeitsprofil der Schneckenvorschubgeschwindigkeit weist während der Einspritzzeit ein Maximum auf, d.h. die zweite Ableitung des Schneckenwegs nach der Zeit ist in diesem Fall gleich Null. Ferner soll die Schneckenvorschubgeschwindigkeit ihren maximalen Wert im mittleren Bereich der Einspritzzeit erreichen und zum Anfang und zum Ende der Einspritzzeit reduziert werden und gegen Null gehen.

Das Einspritzen mit einer niedrigen Geschwindigkeit vermeidet grundsätzlich die Bildung eines Freistrahls und damit die Ausbildung von Markierungen an der Formteiloberfläche. Bei Spritzgießwerkzeugen mit Mehrfachkavitäten können sich geringfügig unterschiedliche Angußsysteme (z.B. geringfügig unterschiedliche Durchmesser der Heiß- oder Kaltkanalverteiler) ungünstig auf eine gleichmäßige Füllung jeder einzelnen Kavität auswirken, wobei dieses Verhalten mit steigender Einspritzgeschwindigkeit exponentiell zunimmt. Mit wenigen Ausnahmen benötigen schnell gefüllte Angußsysteme grundsätzlich mehr Druck als langsamer gefüllte, was letztlich das Druckpotential der Anlage zur Füllung der eigentlichen Kavität deutlich reduzieren kann. Gerade zu Beginn des Spritzgießvorgangs, also beim Beschleunigen des Einspritzkolbens bzw. der Schnecke aus der Ruhelage, sind höhere Druckpotentiale und niedrigere Schneckenvorschubgeschwindigkeiten ein wesentlicher Vorteil für eine reproduzierbare Prozesskonstanz. Die Umlenkung der Schmelze am Anspritzpunkt der Bauteile ist weniger kritisch und die Schmelze wird geringeren Scherbelastungen ausgesetzt. Ein weiterer Vorteil eines geringen Wertes der Schneckenvorschubgeschwindigkeit zu Anfang des Einspritzens ist die Schonung von Labels beim sogenannten In-Mould-Labeling.

Am Ende des Einspritzens, also am Ende der Füllphase, führt eine Reduzierung der Schneckenvorschubgeschwindigkeit zu einem exakteren und damit reproduzierbareren Verhalten beim Umschalten von Einspritzen auf Nachdrücken. Dies gilt insbesondere im Hinblick auf die recht hohen Schneckenvorschubgeschwindigkeiten von oft mehr als 500mm/s. Teilweise werden sogar Schneckenvorschubgeschwindigkeiten von bis zu 1000mm/s erreicht. Die Reduktion der Schneckenvorschubgeschwindigkeit am Ende des Einspritzvorgangs wirkt sich auch vorteilhaft auf den Entlüftungsvorgang aus. Die sich nach dem Schließen des Öffnungsspaltes in dem Werkzeug anstauende Luft wird am Ende des Einspritzvorgangs stark komprimiert und kann bei Reduktion der Schneckenvorschubgeschwindigkeit über die Entlüftungskanäle im Werkzeug über einen längeren Zeitraum entweichen. Damit können so genannte "Brenner", das sind schwarze Stellen am Fließwegende der Formteile, vermieden werden.

Unter Umständen kann gegen Ende des Verfahrensablaufs ein gewisses Prägen der in der Kavität befindlichen Schmelze stattfinden, was sich vorteilhaft auf die Eigenspannungen des Formteils auswirkt. Betrachtet man den Bereich des Anspritzpunktes, so wird dieser aufgrund der erweiterten Kavität zu Beginn des Einspritzens geschont, was insbesondere bei den hier in Rede stehenden dünnwandigen Formteilen von Bedeutung ist. Ausserdem kann es gerade bei dünnwandigen Formteilen leicht zu Verbrennungen durch zu hohe Scherkräfte beim Schmelzefluss oder infolge von Werkzeugabnutzung kommen; solche Verbrennungen können mit der Erfindung vermieden werden. Ferner können mit der Erfindung Beschädigungen von eingelegten Folien oder Dekoren minimiert oder ganz beseitigt werden. Beim Standardspritzgießen vorzusehene Wandverdickungen, sogenannte "Linsen", an der Anspritzstelle werden unnötig, tragen also somit auch zur Materialeinsparung bei. Letztlich können aber auch noch dünnere Bauteile nahezu beliebiger Geometrie hergestellt werden, denn der bei Standardspritzgußverfahren begrenzende, maximale Spritzdruck der Maschine für die Herstellung von Kunststoff-Formteilen mit sehr großen Fließweg-Wanddicken-Verhältnissen wird durch den Werkzeugöffnungsspalt minimiert und das Auspressen der endgültigen Kavität kann über die Schließbewegung der Maschine erfolgen, welche in vorteilhafter Weise eine gleichmaßig über die projizierte Bauteilfläche auftretende Kraft erzeugt, was sich letztlich wiederum positiv auf die Bauteileigenschaften auswirken kann. Durch die Verwendung von Prägewerkzeugen kann bei diesem extremen Auspressen der sich verkleinernden Kavität ein Austreten der Kunststoffschmelze vermeiden werden. Im übrigen kann es gerade bei solch dünnen Bauteilen schnell zum Erstarren der Schmelzefront kommen, so dass bei einem Anhalten wie beim üblichen Spritzprägen und gleichzeitigem Erstarren der Schmelze das Werkzeug nicht mehr vollständig zugefahren werden kann, d.h. das Formteil nicht ordnungsgemäß ausgeformt und fertiggestellt bzw. die angestrebte "dünne" Formteildicke nicht erreicht werden kann.

Da das spezifische Volumen von flüssigem Kunststoff temperaturabhängig ist und sich daher beim Abkühlen der Kunststoffschmelze das Volumen der Schmelze verringert, sind Maßnahmen zu ergreifen, um diese Schwindung zu kompensieren, damit das fertige Kunststoff-Formteil das gewünschte Volumen aufweist. Zum Einen kann nach dem Einspritzen des eigentlichen Schußgewichts oder Schußvolumens noch ein Nachdrücken von Kunststoffschmelze in die Kavität endgültiger Größe erforderlich sein, beispielsweise indem die Plastifizierschnecke um einen geringen Hub weiter nach vorne verfahren wird. Dieses Nachdrücken kann - ebenso wie der vorangegangene Einspritzvorgang - nach einem eingestellten Profil des Drucks im Schneckenvorraum oder der Vorschubgeschwindigkeit der Schnecke erfolgen. Alternativ oder in Kombination dazu kann ein gegenüber dem Volumen des Formteils geringfügig größeres Volumen an Kunststoffschmelze eingespritzt und durch die Schließbewegung des Prägewerkzeug in der Kavität verteilt und verpresst werden, so dass nach Erreichen der endgültigen Größe der Kavität unter Berücksichtigung der Schwindung beim Abkühlen das "richtige" Volumen an erstarrtem Kunststoff vorhanden ist. Für die Geschwindigkeit der Schließbewegung des Prägewerkzeugs kann ein bestimmtes Profil vorgegeben werden. Ebenso kann für die bei der Schließbewegung aufzubringende Schließkraft ein Profil vorgegeben werden, so dass die Schließbewegung ach kraftgeregelt erfolgen kann.

Nachfolgend soll die Erfindung anhand von Ausführungsbeispielen und unter Bezugnahme auf die Figuren 1 bis 8 näher beschrieben werden. Es zeigen:
- Fig.1a - 1d:: schematische Darstellung des Verfahrensablaufs bei einer Spritzgießmaschine mit einem Tauchkantenwerkzeug;
- Fig.2a - 2d:: schematische Darstellung des Verfahrensablaufs bei einer Spritzgießmaschine mit einem Prägewerkzeug mit einem Prägerahmen;
- Fig.3a - 3d:: schematische Darstellung des Verfahrensablaufs bei einer Spritzgießmaschine mit einem Prägewerkzeug mit mehreren Kavitäten und mehrteiligem Prägerahmen;
- Fig.4a: Verlaufsdiagramm für eine erste Ausführungsform des erfindungsgemäßen Verfahrens, wobei kein Nachdruck erfolgt (Einspritzzeit ist kleiner als die Prägezeit),
- Fig.4b: Verlauf des Geschwindigkeitsprofils der Schneckenvorschubgeschwindigkeit während der Einspritzzeit;
- Fig.5: Zyklusablaufdiagramm für die Ausführungsform gemäß Figur 4a;
- Fig.6: Verlaufsdiagramm für eine zweite Ausführungsform des erfindungsgemäßen Verfahrens, wobei ein Nachdruck vorgesehen ist (Einspritzzeit + Nachdruckzeit ist größer als Prägezeit);
- Fig.7: Zyklusablaufdiagramm für die Ausführungsform gemäß Figur 6;
- Fig.8: Verlauf des Druckprofils des Drucks im Schneckenvorraum.

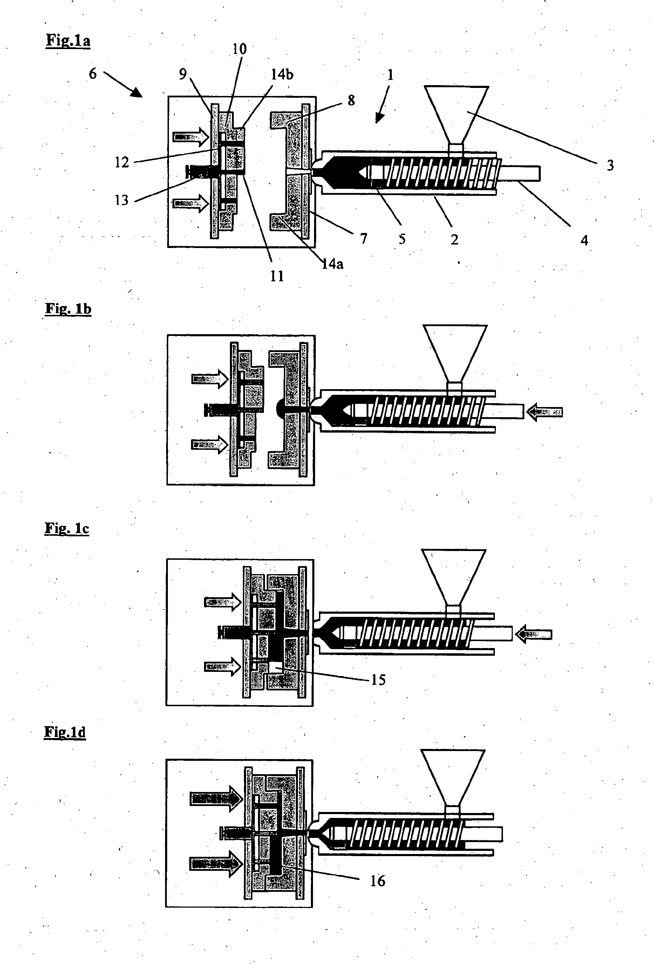

In den Figuren 1a bis 1d weist eine Plastizier- und Einspritzeinheit 1 einen Zylinder 2 mit einem Einfüllschacht 3 für Kunststoffgranulat auf. In dem Zylinder 2 ist eine Plastifizierschnecke 4 dreh- und linearantreibbar und verfügt an ihrem vorderen Ende über eine Rückströmsperre 5. Die Schließeinheit 6 umfaßt unter anderem eine feststehende Formaufspannplatte 7 mit einer feststehenden Formhälfte 8 und eine bewegliche Formaufspannplatte 9 mit einer beweglichen Formhälfte 10, in der Auswerferstifte 11 über eine Auswerferplatte 12 mittels eines geeigneten Antriebs 13 betätigt werden können. Nicht dargestellt sind die an sich bekannten Mittel zum Betätigen der beweglichen Formaufspannplatte 9 sowie zum Verriegeln oder Zuhalten der Schließeinheit. Die beiden Formhälften 8 und 10 bilden zusammen ein Tauchkantenwerkzeug 14 mit Tauchkanten 14a und 14b, um eine Kavität 15 veränderlicher Größer ausbilden zu können. Zu Beginn eines Spritzgießzyklus (Fig.1a) befindet sich die Schließeinheit in geöffnetem Zustand und die Werkzeugschließbewegung kann starten (die beiden auf die bewegliche Formaufspannplatte 9 weisenden Pfeile deuten diese Bewegung an). Ab einem vorgebbarem Abstand zwischen den beiden Formhälften kann der Einspritzvorgang gestartet werden (Fig.1b), indem die Plastifizierschriecke 4 nach vorne verfahren wird (der auf die Plastifizierschnecke 4 weisende Pfeil deutet diese Bewegung an). Parallel dazu wird die Werkzeugschließbewegung kontinuierlich fortgesetzt, d.h. die bewegliche Formhälfte 10 wird unterbrechungsfrei auf die feststehende Formhälfte 8 zubewegt und das Tauchkantenwerkzeug wird zugefahren, wobei der Öffnungsspalt DELTA zwischen den Formhälften kontinuierlich verringert wird, bis die Tauchkanten 14a und 14b schließlich ineinander greifen und eine Kavität 15 veränderlicher Größe gebildet wird (Fig.1c). Der Einspritzvorgang und die Geschwindigkeit der Werkzeugschließbewegung sind dabei so aufeinander abzustimmen, dass die Tauchkanten 14a und 14b spätestens dann ineinandergreifen, wenn an einer Stelle die Fließfront den Rand des Tauchkantenwerkzeugs erreicht hat. Die Kavität 15 wird durch Fortsetzen der Werkzeugschließbewegung weiter verkleinert und parallel wird weiter Schmelze durch den Vorschub der Plastifizierschnecke 4 in diese Kavität 15 eingespritzt. Dabei wird die Schmelze in der Kavität 15 verteilt und füllt diese zunehmend aus. Gegen Ende des Zyklus ist die Kavität 15 vollständig mit Schmelze ausgefüllt. Unter Aufbringung der erforderlichen Werkzeugzuhaltekraft kann das Formteil 16 fertiggestellt werden und sich abkühlen (Fig.1d). Anschließend kann das Tauchkantenwerkzeug 14 aufgefahren und das Formteil 16 mittels der Auswerferstifte 11 von der beweglichen Formhälfte 10 ausgestoßen werden. Die Schließeinheit 6 befindet sich nun wieder im geöffneten Zustand und ein neuer Spritzgießzyklus kann beginnen.

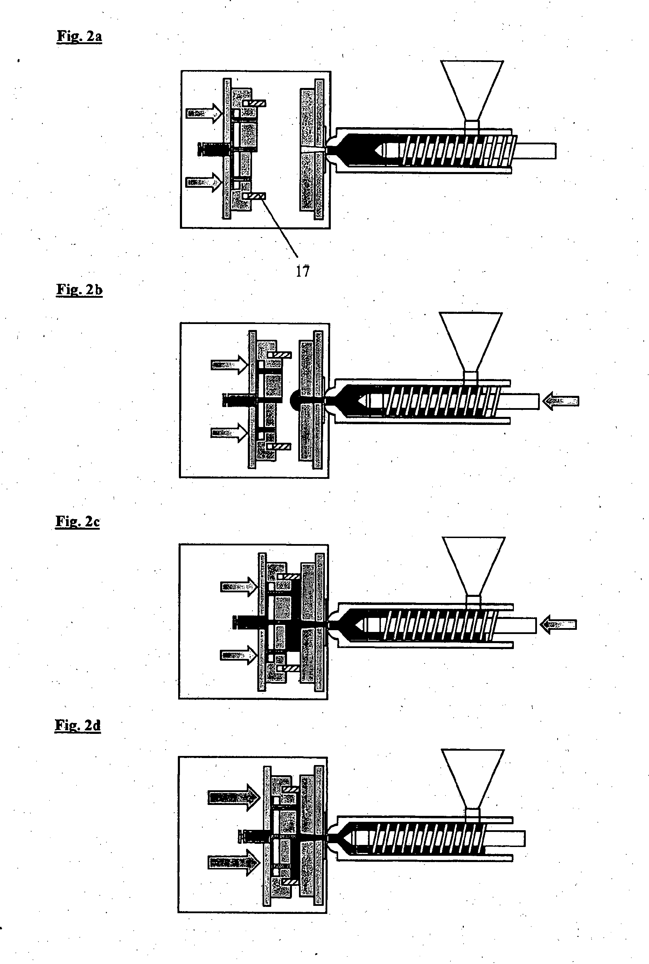

In den Figuren 2a bis 2d ist derselbe Verfahrensablauf, jedoch mit einem anderen Prägewerkzeug dargestellt. Anstelle eines Tauchkantenwerkzeugs ist ein Prägewerkzeug mit einem Prägerahmen 17 vorgesehen, der gegenüber der beweglichen Formhälfte 10 beweglich ist. Beispielsweise kann der Prägerahmen 17 im unbelasteten Zustand (Fig.2a bis 2c) mittels hier nicht dargestellter Federn in der vorderen, d.h. ausgefahrenen, Position gehalten werden. Bei weiterem Zufahren des Prägewerkzeugs bis in die Endposition (Fig.2d) werden die Federn zusammengedrückt und der Prägerahmen 17 relativ zur beweglichen Formhälfte 10 nach hinten verschoben. Anstelle von Federn kann der Prägerahmen 17 auch mit hydraulischen oder pneumatischen Mitteln betätigt werden.

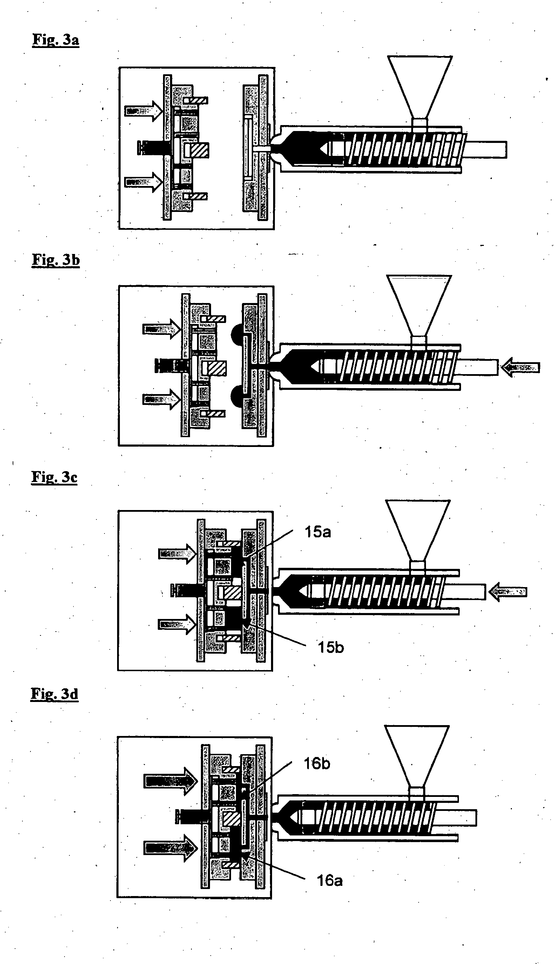

In den Figuren 3a bis 3d ist derselbe Verfahrensablauf wie in den obigen Figuren dargestellt, jedoch mit einem Werkzeug, mit dem mehrere Kavitäten 15a und 15b gebildet werden können, die über zugehörige Angußsysteme mit Schmelze gefüllt werden können. Der Prägerahmen 17 ist in diesem Fall entsprechend diesen Kavitäten ausgebildet (einteilig oder mehrteilig). Im vorliegenden Fall werden somit mit einem Zyklus zwei Formteile 16a und 16b unterschiedlicher Geometrie gleichzeitig hergestellt.

Anstelle des hier beschriebenen Verfahrensablaufs kann mit dem Einspritzen auch gewartet werden, bis die Tauchkantenleisten 14a und 14b ineinander greifen bzw. bis der Prägerahmen 17 die feststehende Formhälfte 8 berührt, so dass bereits zu Beginn des Einspritzens eine geschlossene Kavität 15 bzw. geschlossene Kavitäten 15a und 15b vorliegen. Eine solche Verfahrensvariante kann sich dann anbieten, wenn die Fließfront innerhalb kürzester Zeit den Öffnungsspalt erreichen würde.

Bei welchem Öffnungsspalt DELTA mit dem Einspritzen gestartet werden kann und wie der Einspritzvorgang und die Werkzeugschließbewegung aufeinander abzustimmen sind, hängt von der jeweilige Formteilgeometrie ab. Hierbei ist darauf zu achten, dass die Abstimmung in der Weise erfolgt, dass keine Schmelze aus dem Öffnungsspalt austreten bzw. in die Trennebene zwischen die Formhälften eindringen kann.

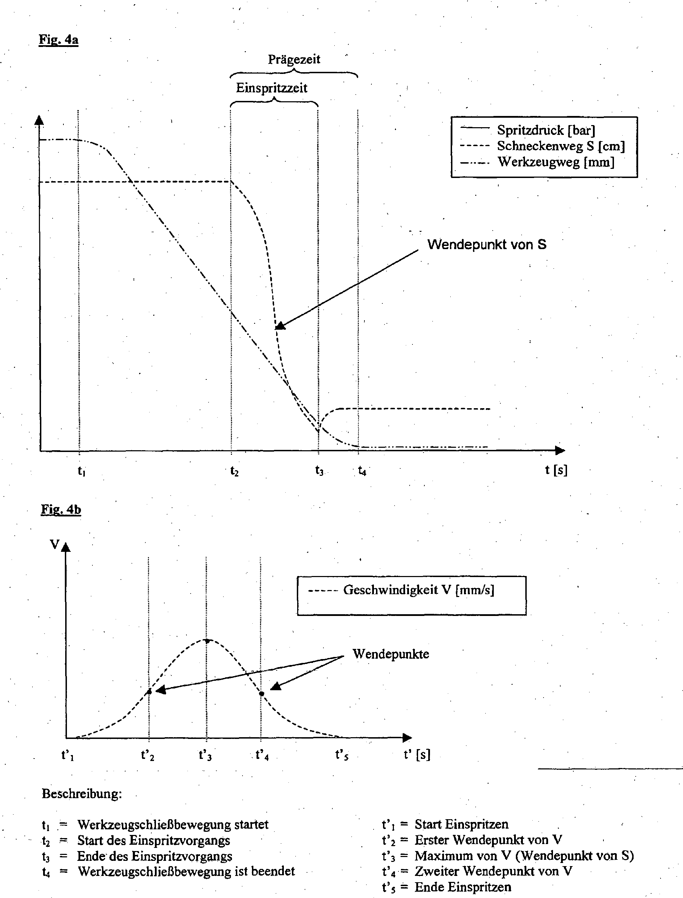

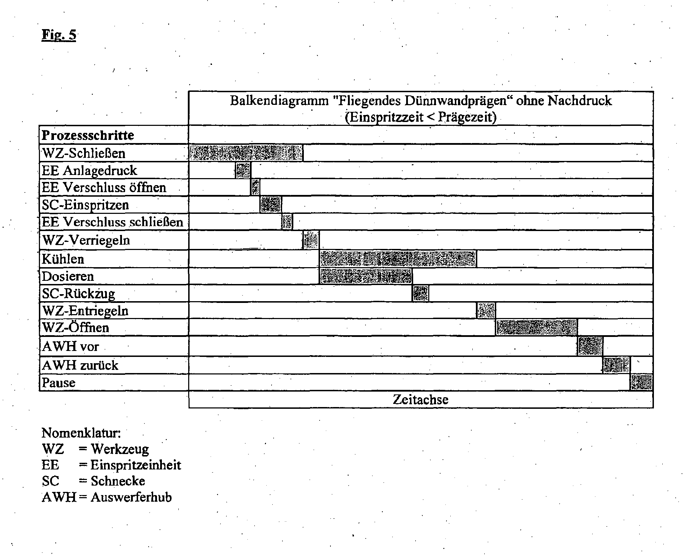

In der Figur 4a ist ein Verlaufsdiagramm für eine erste Ausführungsform des erfindungsgemäßen Verfahrens dargestellt, wobei kein Nachdruck erfolgt. Die Einspritzzeit ist in diesem Fall kleiner als die Prägezeit. Wie der Figur 4a zu entnehmen ist, beschreibt der Schneckenweg S während der Einspritzzeit eine schlangenförmige Linie und weist in etwa in der Mitte der Einspritzzeit einen Wendepunkt auf. An diesem Wendepunkt ist die zweite Ableitung des Schneckenweges S nach der Zeit t gleich Null. Die Figur 4b zeigt den Verlauf der Schneckenvorschubgeschwindigkeit V über die Einspritzzeit, also zwischen den Zeiten t₂ und t₃ von Figur 4a. Die Einspritzgeschwindigkeit bzw, die Schneckenvorschubgeschwindigkeit nimmt langsam aber zunehmend zu, erreicht bei t'₃ ihr Maximum, nimmt dann wieder ab und läuft zu Ende der Einspritzzeit gegen Null aus. An dem Wendepunkt des Schneckenweges S wird also das Maximum der Einspritzgeschwindigkeit bzw. der Schneckenvorschubgeschwindigkeit erreicht. Die Figur 5 ist das zugehörige Zyklusablaufdiagramm als Balkendiagramm.

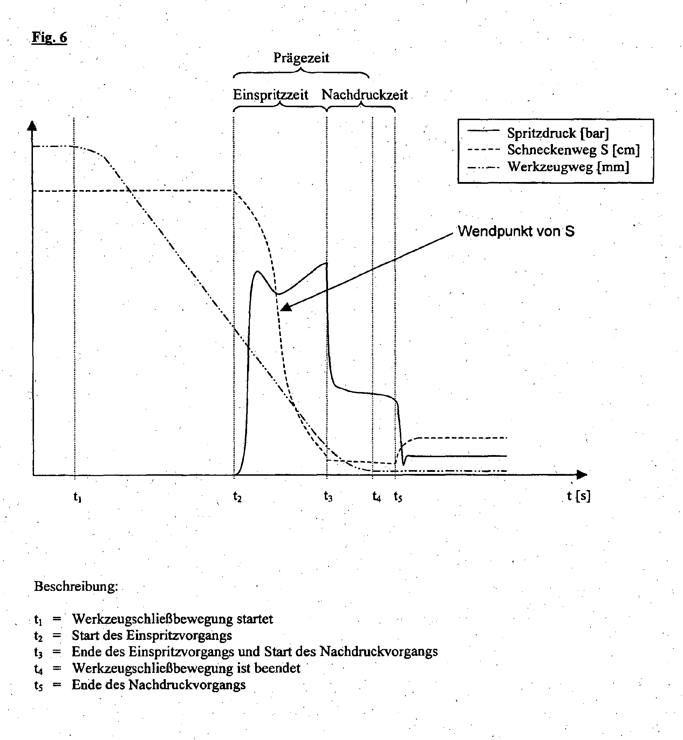

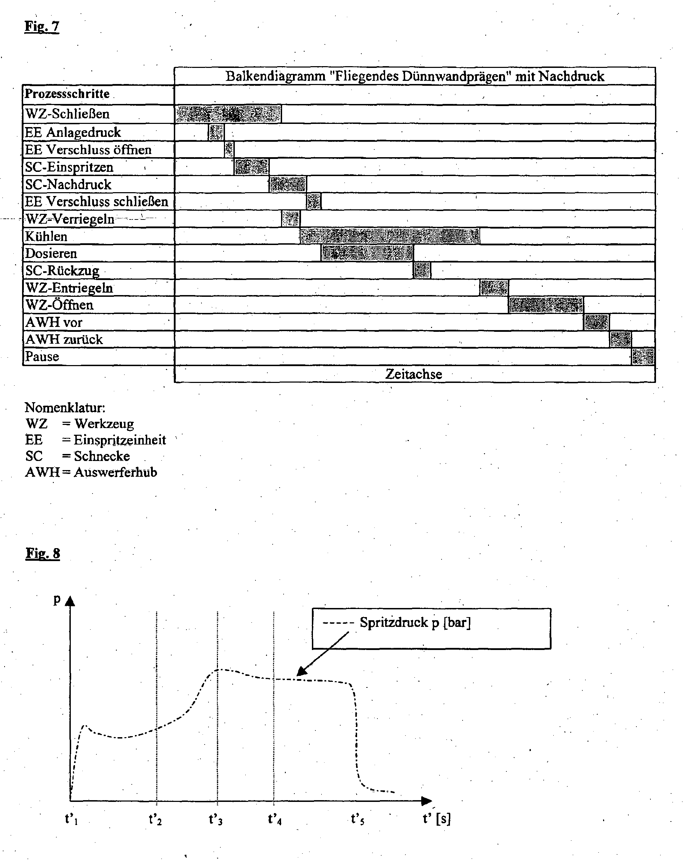

In der Figur 6 ist ein Verlaufsdiagramm für eine zweite Ausführungsform des erfindungsgemäßen Verfahrens dargestellt, wobei ein Nachdruck vorgesehen ist. In diesem Fall ist die Summe aus Einspritzzeit und Nachdruckzeit größer als die Prägezeit. Der Verlauf der Einspritzgeschwindigkeit ist im wesentlichen der gleiche wie in der Figur 4b, so dass auf eine erneute Darstellung verzichtet werden kann. Die Figur 7 ist das zugehörige Zyklusablaufdiagramm als Balkendiagramm.

In der Figur 8 ist ein Beispiel für ein Druckprofil des Drucks im Schneckenvorraum während der Einspritzzeit und für den Fall eines Mehrfachkavitätenwerkzeugs mit einem Angußverteilersystem dargestellt (wie schematisch beispielhaft in den Figuren 3a - 3d gezeigt). Zu Beginn des Schneckenvorschubs (t'₁) steigt der Druck rasch auf ein relatives Maximum an, da das Angußverteilersystem mit Schmelze gefüllt wird. Nachfolgend beim fortgesetzten Einspritzen werden die mehreren Kavitäten selbst gefüllt, so dass keine nennenswerte Drucksteigerung erfolgt. Erst mit zunehmendem Füllgrad, beispielsweise gegen Mitte der Einspritzzeit (t'₃), steigt der Druck auf ein absolutes Maximum an, um sich dann eine Zeitlang auf einem recht hohen vergleichsweise konstanten Niveau zu halten. Am Ende der Einspritzzeit (t'₅) fällt der Druck ab, allerdings nicht auf Null, sondern lediglich auf einen vorgebbaren Staudruck.

### Bezugszeichenliste

- 1: Plastifizier- und Einspritzeinheit
- 2: Zylinder
- 3: Einfüllschacht
- 4: Plastifzierschnecke
- 5: Rückströmsperre
- 6: Schließeinheit
- 7: Feststehende Formaufspannplatte
- 8: Feststehende Formhälfte
- 9: Bewegliche Formaufspannplatte
- 10: Bewegliche Formhälfte
- 11: Auswerferstifte
- 12: Auswerferplatte
- 13: Auswerferantrieb
- 14: Tauchkantenwerkzeug
- 14a,b: Tauchkanten
- 15: Kavität
- 15a: Erste Kavität eines Mehrfachkavitätenwerkzkeugs
- 15b: Zweite Kavität eines Mehrfachkavitätenwerkzeugs
- 16: Formteil
- 16a: Erstes Formteil
- 16b: Zweites Formteil
- 17: Prägerahmen

## Patentansprüche

1. Verfahren zur Herstellung von dünnwandigen Kunststoff-Formteilen durch Einspritzen von Kunststoffschmelze in ein Prägewerkzeug, das wenigstens eine feststehende und wenigstens eine bewegliche Formhälfte (8, 10) aufweist, wobei zwischen den beiden Formhälften (8, 10) in geöffnetem Zustand des Prägewerkzeugs ein Öffnungsspalt gebildet wird, wobei die beiden Formhälften in geschlossenem Zustand des Prägewerkzeugs wenigstens eine Kavität (15) veränderlicher Größe bilden, wobei die bewegliche Formhälfte (10) unterbrechungsfrei auf die feststehende Formhälfte (8) zubewegt und das Prägewerkzeug zugefahren wird, wobei der Öffnungsspalt zwischen den Formhälften kontinuierlich verringert wird und wobei bei der Bewegung der beweglichen Formhälfte auf die feststehende Formhälfte zu die Kunststoffschmelze in das Prägewerkzeug eingespritzt wird, wobei das Einspritzen der Kunststoffschmelze nach einem vorgebbarem Geschwindigkeitsprofil der Schneckenvorschubgeschwindigkeit erfolgt, **dadurch gekennzeichnet, dass** das Geschwindigkeitsprofil der Schneckenvorschubgeschwindigkeit während der Einspritzzeit ein Maximum aufweist, d.h. dass die zweite Ableitung des Schneckenwegs nach der Zeit gleich Null ist, und dass die Schneckenvorschubgeschwindigkeit ihren maximalen Wert im mittleren Bereich der Einspritzzeit erreicht und dass zum Anfang und zum Ende der Einspritzzeit die Schneckenvorschubgeschwindigkeit gegen Null geht.

2. Verfahren nach Anspruch 1,
**dadurch gekennzeichnet, dass**
die Einspritzzeit weniger als 1 Sekunde, vorzugsweise weniger als 0,5 Sekunden beträgt.

3. Verfahren nach Anspruch 1 oder 2,
**dadurch gekennzeichnet, dass**
die maximale Einspritzgeschwindigkeit zwischen 100mm/s und 1000mm/s liegt.

4. Verfahren nach einem der voranstehenden Ansprüche,
**dadurch gekennzeichnet, dass**
das Zufahren des Prägewerkzeugs nach einem vorgebbarem Geschwindigkeitsprofil der Geschwindigkeit der bewegten Formhälfte erfolgt.

5. Verfahren nach einem der voranstehenden Ansprüche,
**dadurch gekennzeichnet, dass**
das Zufahren des Prägewerkzeugs kraftgeregelt erfolgt.

## Claims

1. Method for the production of thin-wall plastic moldings by injecting plastic melt into a mold which has at least one stationary and at least one movable mold half (8, 10), wherein an opening gap is formed between the two mold halves (8, 10) when the mold is in an open state, wherein the two mold halves form at least one cavity (15) of a variable size when the mold is in a closed state, wherein the movable mold half (10) is moved towards the stationary mold half (8) and the mold is closed without interruptions, wherein the opening gap between the mold halves is reduced continuously, and wherein the plastic melt is injected into the mold while the movable mold half is being moved onto the stationary mold half, wherein the injection of the plastic melt is carried out in accordance with a definable speed profile of the screw feed speed,
**characterized in that**
the speed profile of the screw feed speed has a maximum during the injection time, i.e. the second derivative of the screw path with respect to time is equal to zero, and that
the screw feed speed reaches its maximum value in the middle region of the injection time and that at the beginning and at the end of the injection time, the screw feed speed tends towards zero.

2. Method according to claim 1,
**characterized in that**
the injection time amounts to less than 1 second, preferably less than 0.5 seconds.

3. Method according to claim 1 or 2,
**characterized in that**
the maximum injection speed is between 100 mm/s and 1000 mm/s.

4. Method according to one of the above claims,
**characterized in that**
closing the mold is carried out in accordance with a definable speed profile of the speed of the moved mold half.

5. Method according to one of the above claims,
**characterized in that**
closing the mold is carried out at a controlled force.

## Revendications

1. Procédé de fabrication de pièces moulées à parois minces en matière plastique par injection d'une matière plastique fondue dans un outil de matriçage qui présente au moins un demi moule fixe (8) et au moins un demi moule mobile (10), une ouverture en fente étant créée entre les deux demis moules (8, 10) lors de l'état ouvert de l'outil de matriçage, les deux demis moules (8, 10) formant au moins une cavité (15) de taille variable à l'état fermé de l'outil de matriçage, le demi moule mobile (10) se déplaçant sans interruption sur le demi moule fixe (8) pour la fermeture et se déplaçant pour fermer l'outil de matriçage, l'ouverture en fente entre les demis moules diminuant de manière continue et avec le mouvement du demi moule mobile sur le demi moule fixe, la matière plastique fondue étant injectée dans l'outil de matriçage,
l'injection de la matière plastique fondue se déroulant selon un profil de vitesse de la vitesse d'avancement de la vis pouvant être prédéterminé,
**caractérisé en ce que**
le profil de vitesse de la vitesse d'avancement de la vis pendant l'injection présente un maximum, c'est-à-dire que la dérivée seconde de la distance parcourue par la vis est égale à zéro, et
que la vitesse d'avancement de la vis atteint sa valeur maximale à un intervalle de temps d'injection moyen et que la vitesse d'avancement de la vis s'approche de zéro au début et à la fin du temps d'injection.

2. Procédé selon la revendication 1,
**caractérisé en ce que**
le temps d'injection est inférieur à 1 seconde, de préférence inférieur à 0,5 seconde.

3. Procédé selon les revendications 1 ou 2,
**caractérisé en ce que**
la vitesse maximale d'injection se situe entre 100 mm/s et 1000 mm/s.

4. Procédé selon l'une des revendications précédentes,
**caractérisé en ce que**
le déplacement de l'outil de matriçage se déroule selon un profil de vitesse de la vitesse du demi moule mobile pouvant être prédéterminé.

5. Procédé selon l'une des revendications précédentes,
**caractérisé en ce que**
le déplacement de l'outil de matriçage se déroule par un réglage de la force.
